# EUROPÄISCHE PATENTANMELDUNG

(11) **EP 1 930 259 A1**
(43) Veröffentlichungstag der Anmeldung: **11.06.2008**
(21) Anmeldenummer: 07019681.1
(22) Anmeldetag: 09.10.2007
(51) Int. Cl.: B65G 47/84, B65G 17/32

(54) **Greifer, insbesondere für Gefässe**

(30) Priorität: 05.12.2006 DE 202006018379 U
(71) Anmelder: KRONES AG, 93073 Neutraubling (DE)
(72) Erfinder: Zimmerer, Johann, 93170 Bernhardswald (DE); Hausladen, Wolfgang, 93099 Mötzing (DE)

(57) **Zusammenfassung**

Die Erfindung betrifft einen Greifer, insbesondere für Gefäße, mit zwei Greifarmen von denen jeder ein Greifende und ggf. ein Betätigungsende aufweist und die relativ zueinander zangenartig verschwenkbar sind, sowie mit wenigstens einem drehverstellbaren, eine Anschlagfläche mindestens eines Greifers beaufschlagenden Steuernocken, wobei mindestens ein eine Anschlagfläche kontaktierender Bereich des Steuernockens im Wesentlichen radial zu dessen Drehachse elastisch nachgiebig ist.

## Beschreibung

Die Erfindung betrifft einen Greifer, insbesondere für Gefäße, gemäß dem Oberbegriff des Anspruchs 1.

Es ist bereits ein derartiger Greifer für Flaschen bekannt, bei dem die Drehachse des Steuernockens parallel zu den Schwenkachsen der Greifarme verläuft und die Anschlagflächen durch an den Greifarmen befestigte Blattfedern oder elastische Kissen gebildet werden (EP 939 044 A1). Bei einem anderen bekannten Greifer für Flaschen verläuft die Drehachse des Steuernockens rechtwinklig zu den Schwenkachsen der Greifarme und der Steuernocken ist als Ganzes entgegen Federkraft axial auf seiner Antriebswelle verschiebbar (DE 44 24 077 A1).

Bei beiden bekannten Greifern ist ein elastisches "Überdrücken" der Totpunktlage beim Ergreifen eines Gefäßes und damit eine stabile Selbsthaltung der Greifarme in der Greifposition möglich. Ungünstig ist jedoch die auf Grund der vielen Spalt- und Lagerstellen schwierige Reinigung, was einem Einsatz des Greifers in Transport- und Abfüllanlagen mit hohen Sterilitätsanforderungen entgegensteht.

Der Erfindung liegt die Aufgabe zu Grunde, die bekannten Greifer hinsichtlich der Reinigungsmöglichkeit und mikrobiologischen Eigenschaften zu verbessern.

Diese Aufgabe wird erfindungsgemäß durch die Merkmale des Anspruchs 1 gelöst.

Vorteilhafte Weiterbildungen der Erfindung sind in den Unteransprüchen enthalten.

Im Nachstehenden werden mehrere Ausführungsbeispiele der Erfindung anhand der Zeichnungen beschrieben.

Es zeigen:
- Fig. 1: die perspektivische Ansicht eines vollständigen Greifers mit einer ersten Ausführung eines elastischen Steuernockens
- Fig. 2 bis 7: perspektivische Ansichten weiterer Ausführungen von elastischen Steuernocken.

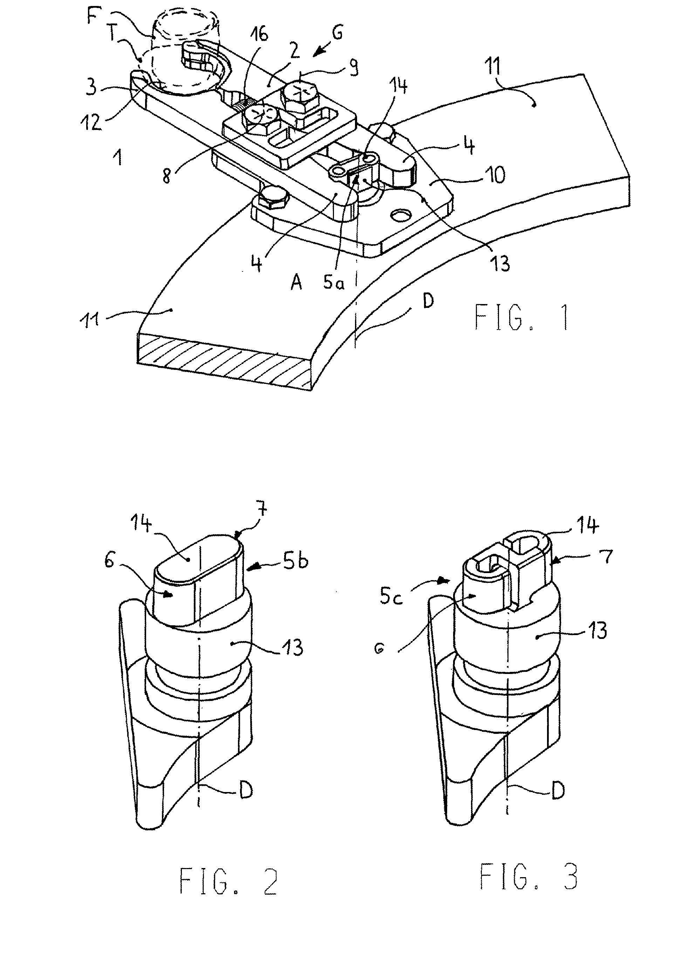

Der Greifer G nach Fig. 1 ist zum Erfassen von strichpunktiert angedeuteten PET-Flaschen F unterhalb des Tragrings T eingerichtet. Er besitzt zwei Greifarme 1, 2, die jeweils um eine Schwenkachse 8, 9 in Form eines Schraubbolzens nach Art einer Greifzange schwenkbar auf einer Grundplatte 10 gelagert sind. Diese ist ihrerseits an der Peripherie eines Rotors 11, z.B. eines Transportsterns oder eines Füllerkarussells befestigt, zusammen mit nicht gezeigten weiteren identischen Greifern G.

Durch seine Schwenkachse 8, 9 wird jeder Greifarm 1, 2 in ein Greifende 3 und ein Betätigungsende 4 unterteilt. Zwischen die Betätigungsenden 4 greift ein von unten in nicht weiter dargestellter Weise (vergleiche z.B. EP 795 500 A1) drehverstellbarer Steuernocken 5 ein, der mit Anlageflächen A an den Betätigungsenden 4 zusammenarbeitet. Die Anlageflächen A werden direkt von den Betätigungsenden 4 der z.B. aus Metall bestehenden Greifarme 1, 2 gebildet und sind entsprechend unnachgiebig. Die Greifenden 3 sind mit gekrümmten Ausnehmungen 12 versehen, deren Krümmungsradius an den Umfang der zu verarbeitenden Flaschen F angepasst ist.

Der Steuernocken 5a nach Fig. 1 weist einen ovalen Umriss auf; seine zentrale Drehachse D verläuft parallel zu den Schwenkachsen 8, 9 der Greifarme 1, 2. In seiner in Fig. 1 gezeigten Schließposition steht der Steuernocken 5a geringfügig jenseits der Totlage oder Strecklage, in der die Betätigungsenden 4 maximal aufgespreizt und die Greifenden 3 maximal angenähert sind. In dieser Schließposition wird der Steuernocken 5a durch einen nicht gezeigten Anschlag in Verbindung mit seiner noch zu beschreibenden elastischen Ausbildung stabil fixiert. Außerdem sorgt die elastische Ausbildung dafür, dass die Tot- oder Strecklage vom Steuernocken 5a durchfahren werden kann, ohne dass die Flasche F beschädigt wird.

Allen in Fig. 1 bis 7 dargestellten Ausführungen des erfindungsgemäßen elastischen Steuernockens 5a bis 5g gemeinsam ist die zentrale Drehachse D und der mehr oder weniger ovale Umriss. Ferner weist jeder Steuernocken 5a bis 5g an den beiden diametral gegenüberliegenden schmalen Stirnseiten abgerundete elastische Bereiche 6 und 7 auf, die mit den Anschlagflächen A an den Betätigungsenden 4 zusammenwirken. Die Mantelflächen der elastischen Bereiche 6 und 7 verlaufen parallel zur Drehachse D; die Hauptkomponente der elastischen Nachgiebigkeit ist radial zur Drehachse D des jeweiligen Steuernockens 5a bis 5g gerichtet.

Unterschiedlich ist die Art und Weise, wie die Elastizität der Bereiche 6 und 7 realisiert ist:

Bei den Steuernocken 5a bis 5c nach Fig. 1 bis 3 ist jeweils an einem starren Grundkörper 13 ein Federkörper 14 aus elastischem Material, vorzugsweise Kunststoff mit guten Gleiteigenschaften, befestigt. Dieser ist beim Steuernocken 5a nach Fig. 1 knochenförmig mit zwei Bohrungen, beim Steuernocken 5b nach Fig. 2 durchgehend oval und beim Steuernocken 5c nach Fig. 3 S-förmig ausgebildet. Bei allen drei Ausführungen werden die elastischen Bereiche 6 und 7 direkt durch die abgerundeten Schmalseiten der Federkörper 14 gebildet.

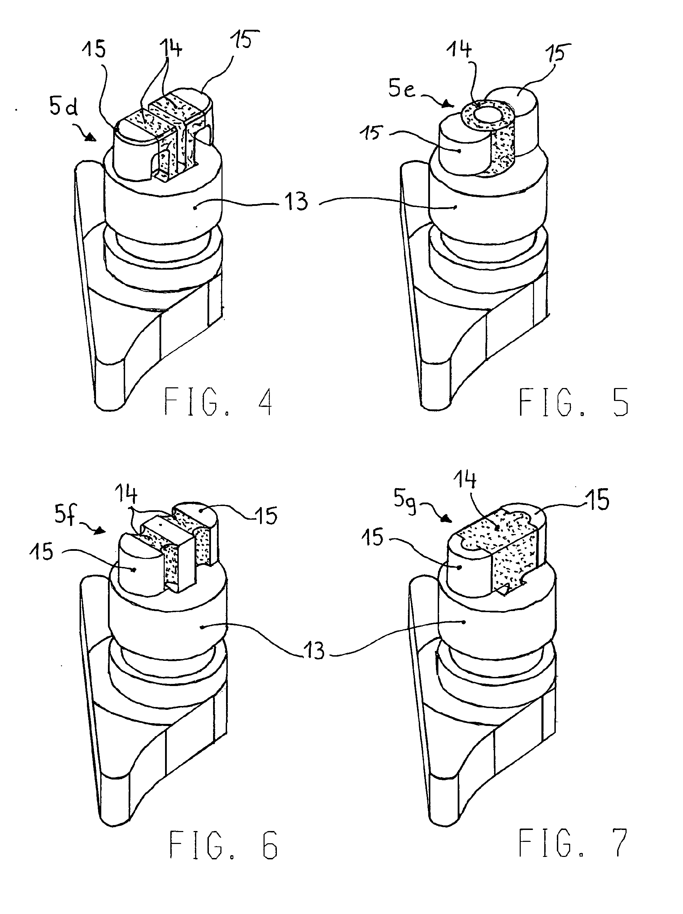

Bei den Steuernocken 5d bis 5g nach Fig. 4 bis 7 sind jeweils an einem starren Grundkörper 13 ein oder zwei Federkörper 14 aus elastischem Material, beispielsweise zähelastischem Kunststoff, befestigt. An diesem wiederum sind jeweils zwei abgerundete Gleitkörper 15 aus hartem Material mit guten Gleiteigenschaften diametral gegenüberliegend befestigt. Bei diesen vier Ausführungen werden die elastisch nachgiebigen Bereiche 6 und 7 der Steuernocken 5d bis 5g durch die abgerundeten Bereiche der Gleitkörper 15 gebildet.

Allen vorbeschriebenen Ausführungen von Greifern G bzw. Steuernocken 5a bis 5g gemeinsam ist die glatte, anbautenfreie Ausbildung der Greifarme 1, 2 insbesondere im Bereich der Betätigungsenden 4 sowie die gleichfalls glatte und allseitig gut zugängliche Gestaltung der Steuernocken 5a bis 5g. Eine intensive Reinigung und Sterilisation dieser Greifer bereitet daher keine Schwierigkeiten. Sie können problemlos in Sterilabfüllanlagen eingesetzt werden.

Zum Öffnen des in Figur 1 in geschlossener Position dargestellten Greifers G wird der Steuernocken 5a im Uhrzeigersinn oder entgegen dem Uhrzeigersinn (wobei er die Totlage passiert) verdreht, bis er im Wesentlichen parallel zu den Greifarmen 1, 2 steht. Dabei nähern sich die Betätigungsenden 4 unter dem Einfluss einer zwischen die Greifenden eingespannten Druckfeder 16 an und die Greifenden 3 entfernen sich entsprechend voneinander. Danach ist die Flaschen F frei und kann entfernt werden.

Die Erfindung ist in gleicher Weise einsetzbar bei Greifern, bei denen nur ein Greifarm beweglich und der andere feststehend oder als Gegenlager ausgebildet ist. Hier greift der elastische Steuernocken nur am beweglichen Greifer an und benötigt eventuell nur einen elastischen Bereich. Entsprechendes gilt für Greifer, bei denen die Greifarme durch ein Getriebe zwangsgekoppelt sind.

## Patentansprüche

1. Greifer (G), insbesondere für Gefäße, mit zwei Greifarmen (1, 2) von denen jeder ein Greifende (3) und ggf. ein Betätigungsende (4) aufweist und die relativ zueinander zangenartig verschwenkbar sind, sowie mit wenigstens einem drehverstellbaren, eine Anschlagfläche (A) mindestens eines Greifers beaufschlagenden Steuernocken (5a bis 5g), **dadurch gekennzeichnet, dass** mindestens ein eine Anschlagfläche (A) kontaktierender Bereich (6, 7) des Steuernockens (5a bis 5g) im Wesentlichen radial zu dessen Drehachse (D) elastisch nachgiebig ist.

2. Greifer (G) nach Anspruch 1, **dadurch gekennzeichnet, dass** ein elastischer Bereich (6, 7) durch einen am Grundkörper (13) des Steuernockens (5a bis 5c) angeordneten Federkörper (14) gebildet wird.

3. Greifer (G) nach Anspruch 1, **dadurch gekennzeichnet, dass** ein elastischer Bereich (6, 7) durch einen unter Zwischenschaltung eines Federkörpers (14) am Grundkörper (15) des Steuernockens (5d bis 5g) angeordneten Gleitkörper (15) gebildet wird.
